# EUROPÄISCHE PATENTANMELDUNG

(11) **EP 0 645 292 A2**
(43) Veröffentlichungstag der Anmeldung: **29.03.1995**
(21) Anmeldenummer: 94115153.2
(22) Anmeldetag: 26.09.1994
(51) Int. Cl.: B60T 15/18

(54) **Dreidruckventil für eine Steuereinrichtung einer Druckluftbremse**

(30) Priorität: 29.09.1993 DE 4333149
(71) Anmelder: Grundstücks GmbH & Co. Besitz KG, D-12277 Berlin (DE)
(72) Erfinder: Inozemtsev, Vladimir, Prof., Moskau 129224 (RU)
(74) Vertreter: Patentanwälte Beetz - Timpe - Siegfried Schmitt-Fumian - Mayr

(57) **Zusammenfassung**

Die Erfindung betrifft ein Dreidruckventil für eine Steuereinrichtung einer Druckluftbremse, mit einer ersten Membrane (2), die in einem Gehäuse (1) eine mit der Atmosphäre verbundene Entlüftungskammer (5) von einer mit Bremszylinderdruck beaufschlagbaren Druckkammer (6) abtrennt, einer mit der ersten Membrane (2) über eine Stange (17) gekoppelten zweiten Membrane (3), die in dem Gehäuse (1) eine Steuerdruckkammer (8) von einer Gegendruckkammer (9) abtrennt, und einem von der Stange (17) betätigbaren Zweisitzventil (37, 38, 39) zur Steuerung der Entlüftung oder Füllung eines Bremszylinders (12) aus einem Vorratsbehälter (10). Zur Sicherung einer schnellen Anfangsfüllung des Bremszylinders mit Druckluft ist das Zweisitzventil (37, 38, 39) erfindungsgemäß in einer zwischen den beiden Membranen (2, 3) im Gehäuse (1) ausgebildeten Bremsdruckkammer (13) angeordnet, die über eine Drossel (14) mit der Druckkammer (6) in Strömungsverbindung steht und diese verzögert mit dem Bremszylinderdruck beaufschlagt. Die Stange (17) ist ferner über ein elastisches Element (19) mit der ersten Membrane (2) gekoppelt.

## Beschreibung

Die Erfindung betrifft ein Dreidruckventil für eine Steuereinrichtung einer Druckluftbremse, mit einer ersten Membrane, die in einem Gehäuse eine mit der Atmosphäre verbundene Entlüftungskammer von einer mit Bremszylinderdruck beaufschlagbaren Druckkammer abtrennt, einer mit der ersten Membrane über eine Stange gekoppelten zweiten Membrane, die in dem Gehäuse eine Steuerdruckkammer von einer Gegendruckkammer abtrennt, und einem von der Stange betätigbaren Zweisitzventil zur Steuerung der Entlüftung oder Befüllung eines Bremszylinders aus einem Vorratsbehälter.

Aus der DE-PS 487 044 ist ein Dreidruckventil für eine Einkammer-Druckluftbremse bekannt, das zwei in einem Gehäuse angeordnete und über eine Kolbenstange miteinander verbundene Steuerkolben aufweist. Der eine Steuerkolben trennt eine direkt an einen Bremszylinder angeschlossene Druckkammer von einem mit der Atmosphäre verbundenen Raum ab, während der andere Steuerkolben eine mit einer Vorsteuerkammer verbundene Steuerdruckkammer von einer Gegendruckkammer abtrennt. In der Steuerdruckkammer ist ein von dem Steuerkolben betätigter Flachschieber angeordnet, der den Bremszylinder entweder mit einem Vorratsbehälter oder mit der Atmosphäre verbindet. Aufgrund der Schieberbauweise weist dieses bekannte Dreidruckventil jedoch ein relativ schlechtes Ansprechverhalten insbesondere wegen der im Langzeitbetrieb ansteigenden Reibungswiderstände auf.

Ein aus der DE-PS 27 02 855 bekanntes gattungsgemäßes Dreidruckventil enthält zwei in einem Gehäuse angeordnete Membranen, die über eine Verbindungsstange miteinander gekoppelt sind. Die kleinere Membrane trennt eine mit Bremszylinderdruck beaufschlagbare Druckkammer von einer mit Atmosphärendruck beaufschlagten Entlüftungskammer. Die größere Membrane trennt eine mit der Hauptluftleitung verbundene Steuerdruckkammer von einer Gegendruckkammer konstanten Druckes. Über die Verbindungsstange wird ein oberhalb der kleineren Membrane angeordneter Ventilteller eines Zweisitzventils betätigt, das die Druckkammer und damit den Bremszylinder mit einem Vorratsbehälter oder mit der Atmosphäre verbindet. Der Ventilteller bildet zusammen mit einem gehäusefesten Ventilsitz ein Einlaßventil aus einem mit dem Vorratsbehälter verbundenen Raum in die mit dem Bremszylinder in Verbindung stehende Druckkammer oberhalb der kleineren Membrane. Beim Öffnen des Einlaßventils wird somit der mit Vorratsbehälterdruck beaufschlagte Raum unmittelbar mit der Druckkammer oberhalb der kleineren Membrane verbunden. Dadurch steigt der Druck in der Druckkammer bereits am Anfang des Bremsvorgangs schnell an, wodurch das Absperrventil zwischen dem Vorratsbehälter und der Bremsdruckkammer relativ schnell in Schließrichtung beaufschlagt wird. Dadurch erfolgt eine langsamere Befüllung des Bremszylinders und ein dadurch bedingtes langsameres Ausfahren des Bremskolbens.

Aufgabe der Erfindung ist es, bei einem Dreidruckorgan der eingangs genannten Art eine schnelle Anfangsfüllung des Bremszylinders mit Druckluft zu sichern.

Diese Aufgabe wird erfindungsgemäß dadurch gelöst, daß das Zweisitzventil in einer zwischen den beiden Membranen im Gehäuse ausgebildeten Bremsdruckkammer angeordnet ist, die über eine Drossel mit der Druckkammer in Strömungsverbindung steht und diese verzögert mit dem Bremszylinderdruck beaufschlagt, und daß die Stange über ein elastisches Element mit der ersten Membrane gekoppelt ist.

Die mit der Erfindung erzielten Vorteile bestehen insbesondere in der schlagartigen Vollöffnung der Strömungsverbindung zwischen dem Vorratsbehälter und dem Bremszylinder durch das Zweisitzventil am Anfang des Bremsvorgangs, was eine entsprechend schnelle Befüllung des Bremszylinders und damit ein schnelleres Ausfahren des Bremszylinderkolbens am Bremsbeginn bewirkt. Da die Druckluft bei der Einleitung des Bremsvorgangs über die Drossel von der Bremsdruckkammer zur Druckkammer oberhalb der ersten Membrane strömt, erfolgt der Druckanstieg in dieser langsamer als in der Bremsdruckkammer, so daß die erste Membrane am Anfang des Bremsvorgangs die Kraft des elastischen Elements nicht überwindet und keine Wirkung auf die Stange ausübt. Daher erfolgt beim Bremsbeginn eine sehr schnelle und vollständige Öffnung des Absperrventils zwischen dem Vorratsbehälter und der Bremsdruckkammer. Darüber hinaus wird die Bewegung des Membransystems im Dreidruckventil stabilisiert und Schwingungserscheinungen können vermieden werden.

Gemäß einer zweckmäßigen Weiterbildung der Erfindung weist das Zweisitzventil ein zwischen der Steuerdruckkammer und der Entlüftungskammer im Gehäuse verschiebbares Ventilbauteil auf, das mit einem an der Stange ausgebildeten Ventilelement ein Sperrventil zwischen der Bremsdruckkammer und der Atmosphäre sowie mit einem gehäusefesten Ventilsitz ein Absperrventil zwischen dem Vorratsbehälter und der Bremsdruckkammer bildet. Dadurch ergibt sich eine sehr kompakte Bauweise des Dreidruckventils.

In einer vorteilhaften Ausgestaltung der Erfindung ist der ersten Membrane eine Entlüftungseinrichtung zur zusätzlichen Entlüftung der Hauptluftleitung zugeordnet. Die Entlüftungseinrichtung umfaßt ein von einem Stößel an der ersten Membrane betätigbares Entlüftungsventil zur Steuerung einer Strömungsverbindung zwischen einer mit der Hauptluftleitung in Verbindung stehenden ersten Kammer und einer mit der Atmosphäre verbundenen zweiten Kammer im Gehäuse. Durch diese Ausgestaltung kann auf eine zusätzliche Membrane zur Steuerung einer Zusatzentlüftung der Hauptluftleitung verzichtet werden.

Weitere Vorteile und Besonderheiten der Erfindung ergeben sich aus der folgenden Beschreibung eines bevorzugten Ausführungsbeispiels anhand der schematischen Zeichnung.

Das dargestellte Dreidruckventil enthält ein Gehäuse 1, in dem zwei Membranen 2 und 3 angeordnet sind. Die erste Membrane 2 trennt mit dem Gehäuse 1 eine über eine Auslaßöffnung 4 mit der Atmosphäre verbundene Entlüftungskammer 5 von einer mit Bremszylinderdruck beaufschlagbaren Druckkammer 6. Die zweite Membrane 3 trennt mit dem Gehäuse 1 eine über einen Kanal 7 mit Steuerdruck beaufschlagbare Steuerdruckkammer 8 von einer Gegendruckkammer 9. Der Kanal 7 kann beispielsweise mit einer nicht gezeigten Vorsteuerkammer oder einer Hauptluftleitung in Druckluftverbindung stehen. Zwischen der Entlüftungskammer 5 und der Steuerdruckkammer 8 ist im Gehäuse 1 ein mit einem Vorratsbehälter 10 in Verbindung stehender Druckraum 11 und eine mit einem Bremszylinder 12 verbundene Bremsdruckkammer 13 ausgebildet, die mit der Druckkammer 6 über eine Drossel 14 verbunden ist. Zwischen der Steuerdruckkammer 8 und der Bremsdruckkammer 13 ist im Gehäuse 1 eine erste Trennwand 15 und zwischen dem Druckraum 11 und der Entlüftungskammer 5 eine zweite Trennwand 16 ausgebildet.

An der zweiten Membrane 3 ist eine Stange 17 angeordnet, die von der Steuerdruckkammer 8 bis in die Entlüftungskammer 5 ragt. An dem in die Entlüftungskammer 5 hineinragenden Ende der Stange 17 ist ein Ansatz 18 ausgebildet, an dem das eine Ende einer Feder 19 anliegt. Das andere Ende der Feder 19 liegt an der Außenseite eines Stößels 20 an, der an der ersten Membrane 2 befestigt ist. An der Verbindungsstelle mit der zweiten Membrane 3 weist die Stange 17 ein Ventilgehäuse 21 auf, dessen Innenraum 22 mit der Gegendruckkammer 9 über eine Ventilöffnung 23 verbunden ist. Im Ventilgehäuse 21 ist ferner eine Drosselbohrung 24 angeordnet, die den Innenraum 22 mit der Steuerdruckkammer 8 verbindet. Die Ventilöffnung 23 ist von einem ringförmigen Ventilsitz 25 umgeben, der mit einem im Innenraum 22 verschiebbaren federbelasteten Ventilglied 26 ein Sperrventil zwischen dem über die Drosselbohrung 24 mit der Steuerdruckkammer 8 verbundenen Innenraum 22 und der Gegendruckkammer 9 bildet. Das Ventilglied 26 ist einerseits durch einen in die Öffnung 23 ragenden Steg 27 des Gehäuses 1 abgestützt und wird andererseits durch eine zwischen dem Ventilglied 26 und der Stange 17 im Innenraum 22 angeordnete Feder 28 beaufschlagt. In dem Ventilglied 26 sitzt ein Dichtelement 29, das in der geschlossenen Stellung des Sperrventils mit dem ringförmigen Ventilsitz 25 zusammenwirkt.
In der ersten Trennwand 15 ist eine Dichtung 30 festgelegt, welche die Steuerdruckkammer 8 gegenüber der Bremsdruckkammer 13 abdichtet. Die Dichtung 30 weist zwei in der ersten Trennwand 15 angeordnete Dichtringe 31, 32 auf, deren entgegengesetzt abgewinkelte Dichtlippen 33, 34 an der Stange 17 anliegen.

Zwischen den beiden Membranen 2, 3 ist im Gehäuse 1 ein Zweisitzventil 35 zur Steuerung der Entlüftung oder Befüllung des Bremszylinders 12 aus dem Vorratsbehälter 10 angeordnet. Das Zweisitzventil 35 umfaßt ein im Gehäuse 1 verschiebbares und die Stange 17 unter Bildung einer Durchgangsöffnung 36 umgebendes Ventilelement 37, das mit einem gehäusefesten Ventilsitz 38 ein Absperrventil zwischen dem Druckraum 11 und der Bremsdruckkammer 13 bildet. Das Ventilelement 37 bildet darüber hinaus mit einem an der Stange 17 ausgebildeten Ventilglied 39 ein Absperrventil zwischen der Bremsdruckkammer 13 und der Atmosphäre.

Das Ventilelement 37 enthält einen im Druckraum 11 verschiebbaren Radialflansch 40 und einen zur Entlüftungskammer 5 durch die zweite Trennwand 16 verlaufenden hohlzylindrischen Ansatz 41, an dessen Außenseite eine in der zweiten Trennwand 16 angeordnete Radialdichtung 42 anliegt. Durch die Radialdichtung 42 wird der mit dem Vorratsbehälter 10 verbundene Druckraum 11 gegenüber der Entlüftungskammer 5 abgedichtet. Das Ventilelement 37 wird durch eine zwischen der Trennwand 16 und dem Flansch 40 angeordnete Feder 43 an den gehäusefesten Ventilsitz 38 angedrückt, der am Übergang von der Bremsdruckkammer 13 zum Druckraum 11 ausgebildet ist. Im Radialflansch 40 ist ein Dichtring 44 angeordnet, der je nach Stellung des Zweisitzventils 35 mit dem gehäusefesten Ventilsitz 38 bzw. dem Ventilglied 39 an der Stange 17 in Eingriff gelangt. Das Ventilelement 37 weist eine Durchgangsbohrung 45 auf, durch welche die Stange 17 mit einem Spiel verläuft. Dadurch wird die Durchgangsöffnung 36 gebildet, welche eine durch das Ventilglied 39 absperrbare Strömungsverbindung zwischen der Bremsdruckkammer 13 und der mit der Atmosphäre verbundenen Entlüftungskammer 5 ermöglicht. In der dargestellten Stellung sitzt das Ventilelement 37 auf dem gehäusefesten Ventilsitz 38 und trennt den Druckraum 11 von der Bremsdruckkammer 13, während das Ventilglied 39 die Verbindung zwischen der Bremsdruckkammer 13 und der Entlüftungskammer 5 über die Durchgangsöffnung 36 geöffnet hält. Beim Einleiten des Bremsvorgangs erfolgt infolge einer Druckabsenkung in der Steuerdruckkammer 8 eine Verlagerung der Membrane 3 zusammen mit der Stange 17, wobei das an der Stange ausgebildete Ventilglied 39 zur Anlage am Ventilelement 37 gelangt und damit die Durchgangsöffnung 36 zwischen der Bremsdruckkammer 13 und der Entlüftungskammer 5 abschließt. Anschließend wird über das Ventilglied 39 das Ventilelement 37 entgegen der Kraft der Feder 43 von dem Ventilsitz 38 angehoben und damit die Verbindung zwischen dem Druckraum 11 und der Bremsdruckkammer 13 geöffnet.

An der ersten Membrane 2 ist ferner eine Entlüftungseinrichtung 46 zur zusätzlichen Entlüftung der Hauptluftleitung vorgesehen. Die Entlüftungseinrichtung 46 enthält ein von dem Stößel 20 an der ersten Membrane 2 betätigbares Ventilbauteil 47, das mit einem gehäusefesten Ventilsitz 48 ein Entlüftungsventil zwischen einer mit der Hauptluftleitung während ihrer zusätzlichen Entladung in Verbindung stehenden ersten Kammer 49 und einer mit der Atmosphäre verbundenen zweiten Kammer 50 im Gehäuse 1 bildet. Der an der ersten Membrane 2 angeordnete Stößel 20 enthält einen in der Druckkammer 6 am Gehäuse 1 zur Anlage gelangenden Ringansatz 51 und einen zentralen Hohlzapfen 52, der eine Bohrung 53 in einer im Gehäuse 1 ausgebildeten dritten Trennwand 54 durchragt, in welcher eine an dem Hohlzapfen 52 anliegende Radialdichtung 55 die zweite Kammer 50 gegenüber der Druckkammer 6 abdichtet. Im Stößel 20 und im Hohlzapfen 52 ist eine zur Entlüftungskammer 5 offene Bohrung 56 ausgebildet, die über eine seitliche Öffnung 57 mit der zweiten Kammer 50 verbunden ist. Am freien Ende des Hohlzapfens 52 befindet sich ein zentraler Ansatz 58, der das in der ersten Kammer 49 bewegliche Ventilglied 47 in Öffnungsrichtung betätigt. In Schließrichtung wird das Ventilglied 47 durch eine zwischen dem Gehäuse 1 und dem Ventilglied 47 angeordnete Feder 59 beaufschlagt.

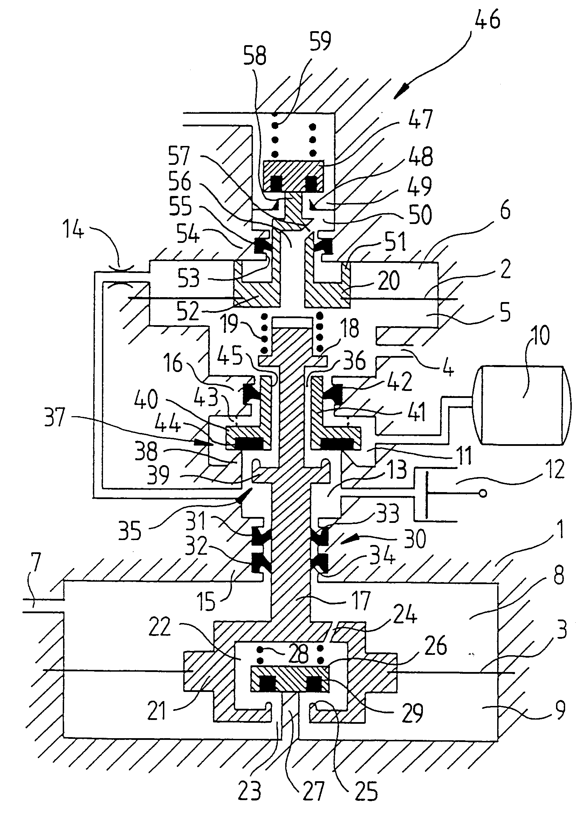

Die Funktionsweise des erfindungsgemäßen Dreidruckventils wird im folgenden anhand des in der Zeichnung dargestellten Ausführungsbeispiels erläutert:

Beim Auffüllen der Bremse mit Druckluft gelangt diese aus der Hauptluftleitung oder der Vorsteuerkammer über den Kanal 7 in die Steuerdruckkammer 8. Aufgrund des Druckunterschiedes zwischen der Steuerdruckkammer 8 und der Gegendruckkammer 9 biegt sich die zweite Membrane 3 nach unten.

Das zwischen dem Ventilsitz 25 und dem Ventilkörper 26 gebildete Sperrventil ist geöffnet und die Druckluft kann aus der Steuerdruckkammer 8 über die Drosselbohrung 24, den Innenraum 22 und die Öffnung 23 in die Gegendruckkammer 9 strömen. Das zwischen dem Ventilglied 39 und dem Ventilelement 37 gebildete Absperrventil ist geöffnet, so daß die mit dem Bremszylinder 12 verbundene Bremsdruckkammer 13 sowie die Druckkammer 6 über die Durchgangsöffnung 36 mit der zur Atmosphäre hin geöffneten Entlüftungskammer 5 verbunden sind. Das zwischen dem Ventilelement 37 und dem gehäusefesten Ventilsitz 38 gebildete Absperrventil ist geschlossen und sperrt den Vorratsbehälter 10 ab, der über ein nicht dargestelltes Ventil gefüllt werden kann. Die zwischen der Stange 17 und dem Stößel 20 angeordnete Feder 19 ist derart ausgelegt, daß sich der an der ersten Membrane 2 angeordnete Stößel 20 beim Auffüllen der Bremse in der in der Zeichnung dargestellten Anlagestellung am Gehäuse 1 befindet. In dieser Stellung betätigt der am Stößel 20 vorgesehene Zapfen 58 das zwischen dem Ventilbauteil 47 und dem Ventilsitz 48 gebildete Entlüftungsventil in Öffnungsrichtung, wodurch die in die erste Kammer 49 einströmende Druckluft über die zweite Kammer 50, die seitliche Öffnung 57 und die Bohrung 56 in die mit der Atmosphäre verbundene Entlüftungskammer 5 und von da in die Atmosphäre strömen kann.

Bei einer langsamen Druckabsenkung in der Hauptluftleitung, die nicht zu einem Ansprechen der Bremse führt, überströmt die Druckluft aus der Gegendruckkammer 9 in die Steuerdruckkammer 8 über das geöffnete Ventil 25, 26, den Innenraum 22 und die Drosselbohrung 24, ohne dabei eine Verlagerung der zweiten Membrane 3 auszulösen.

Beim Bremsen wird über die Hauptluftleitung oder die Vorsteuerkammer eine rasche Druckabsenkung in der Steuerdruckkammer 8 herbeigeführt. Aufgrund der schnellen Druckabsenkung in der Steuerdruckkammer 8 bewegt sich die Membrane 3 und die daran angeordnete Stange 17 nach oben, wodurch das Sperrventil 25, 26 geschlossen wird. Somit wird die Gegendruckkammer 9 von der Hauptluftleitung abgetrennt. Durch weitere Verlagerung der Stange 17 nach oben wird das durch das Ventilelement 37 und das Ventilglied 39 gebildete Absperrventil geschlossen, wodurch die Bremsdruckkammer 13 und die Druckkammer 6 von der Atmosphäre getrennt sind. Anschließend wird das von dem Ventilelement 37 und dem gehäusefesten Ventilsitz 38 gebildete Absperrventil geöffnet und verbindet den Vorratsbehälter 10 mit der Bremsdruckkammer 13 und dem Bremszylinder 12. Da die Druckluft aus dem Vorratsbehälter 10 über die Drossel 14 in die Druckkammer 6 gelangt, erfolgt der Druckanstieg in dieser langsam im Vergleich zum Druckanstieg im Bremszylinder, so daß die Membrane 2 am Anfang des Bremsvorgangs die Kraft der Feder 19 nicht überwinden kann und keine Wirkung auf die Stange 17 ausübt. Daher erfolgt beim Bremsbeginn eine schnelle Vollöffnung des Absperrventils zwischen dem Druckraum 11 und der Bremsdruckkammer 13, was zu einem schnellen Druckanstieg im Bremszylinder 12 und zu einem verzögerten Druckanstieg in der Druckkammer 6 führt. Erst nachdem der Luftdruck in der Druckkammer 6 denjenigen Wert erreicht, bei dem die Membrane 2 die Kraft der Feder 19 überwinden kann, biegt sich die Membrane 2 mit dem Stößel 20 nach unten. Bei der Abwärtsbewegung des Stößels 20 schließt das Entlüftungsventil 47, 48. Durch den weiter ansteigenden Druck in der Druckkammer 6 beginnt die Membrane 2 eine Kraft auf die Stange 17 zu übertragen.

Entsprechend der Druckabsenkung in der Steuerdruckkammer 8 erhöht sich die Druckdifferenz auf beiden Seiten der Membrane 3. Dementsprechend erfolgt auch die Füllung des Bremszylinders 12 bzw. der Bremsdruckkammer 13 durch das geöffnete Absperrventil 37, 38 unter Sicherung des Gleichgewichts der Kräfte, die auf die Membranen 2 und 3 wirken. Danach schließt das zwischen dem Ventilelement 40 und dem Ventilsitz 38 gebildete Absperrventil 37.

Beim Lösen der Bremse wird der Druck in der Hauptluftleitung bzw. der Vorsteuerkammer und damit im Steuerdruckraum 8 erhöht. Die Membrane 3 bewegt sich gemäß der Zeichnung nach unten, wodurch das zwischen dem Ventilglied 39 und dem Ventilelement 40 gebildete Absperrventil öffnet. Dabei wird die Bremsdruckkammer 13 und die Druckkammer 6 über die Durchgangsöffnung 36 und die Auslaßöffnung 4 mit der Umgebung verbunden. Die Druckabsenkung in der Bremsdruckkammer 13 und dem damit verbundenen Bremszylinder 12 erfolgt entsprechend der Druckerhöhung in der Steuerdruckkammer 8. Je nach Größe der Druckerhöhung in der Steuerdruckkammer 8 kann entweder ein abgestuftes oder volles Lösen der Bremse erfolgen. Durch die zwischen dem Stößel 20 und der Stange 17 angeordnete Feder 19 wird eine Lösenhilfe gesichert.

## Patentansprüche

1. Dreidruckventil für eine Steuereinrichtung einer Druckluftbremse, mit
- einer ersten Membrane (2), die in einem Gehäuse (1) eine mit der Atmosphäre verbundene Entlüftungskammer (5) von einer mit Bremszylinderdruck beaufschlagbaren Druckkammer (6) trennt,
- einer mit der ersten Membrane (2) über eine Stange (17) gekoppelten zweiten Membrane (3), die in dem Gehäuse (1) eine Steuerdruckkammer (8) von einer Gegendruckkammer (9) trennt, und
- einem von der Stange (17) betätigbaren Zweisitzventil (37, 38, 39) zur Steuerung der Entlüftung oder Füllung eines Bremszylinders (12) aus einem Vorratsbehälter (10),
dadurch gekennzeichnet,
- daß das Zweisitzventil (37, 38, 39) in einer zwischen den beiden Membranen (2, 3) im Gehäuse (1) ausgebildeten Bremsdruckkammer (13) angeordnet ist, die über eine Drossel (14) mit der Druckkammer (6) in Strömungsverbindung steht und diese verzögert mit dem Bremszylinderdruck beaufschlagt, und
- daß die Stange (17) über ein elastisches Element (19) mit der ersten Membrane (2) gekoppelt ist.

2. Dreidruckventil nach Anspruch 1, dadurch gekennzeichnet, daß das Zweisitzventil (37, 38, 39) ein im Gehäuse (1) verschiebbares Ventilelement (37) aufweist, das mit einem an der Stange (17) ausgebildeten Ventilglied (39) ein Absperrventil zwischen der Bremsdruckkammer (13) und der Atmosphäre sowie mit einem gehäusefesten Ventilsitz (38) ein Sperrventil zwischen einem mit dem Vorratsbehälter (10) verbundenen Druckraum (11) und der Bremsdruckkammer (13) bildet.

3. Dreidruckventil nach Anspruch 2, dadurch gekennzeichnet, daß das Ventilelement (37) eine von der Bremsdruckkammer (13) zur Entlüftungskammer (5) führende Druchgangsbohrung (45) aufweist, die von der Stange (17) unter Bildung einer von dem Ventilglied (39) verschließbaren Durchgangsöffnung (36) durchragt wird.

4. Dreidruckventil nach Anspruch 2 oder 3, dadurch gekennzeichnet, daß das Ventilelement (37) einen im Druckraum (11) verschiebbaren Radialflansch (40) und einen zur Entlüftungskammer (5) verlaufenden Ansatz (41) aufweist, an dem eine im Gehäuse (1) angeordnete Radialdichtung (42) anliegt.

5. Dreidruckventil nach einem der Ansprüche 2 bis 4, dadurch gekennzeichnet, daß an der zur Bremsdruckkammer (13) weisenden Stirnseite des Ventilelements (37) eine Dichtung (44) zum Eingriff mit dem gehäusefesten Ventilsitz (38) und dem Ventilglied (39) vorgesehen ist.

6. Dreidruckventil nach einem der Ansprüche 1 bis 5, dadurch gekennzeichnet, daß der ersten Membrane (2) eine Entlüftungseinrichtung (46) zur zusätzlichen Entlüftung der Hauptluftleitung zugeordnet ist.

7. Dreidruckventil nach Anspruch 6, dadurch gekennzeichnet, daß die Entlüftungseinrichtung (46) ein von einem Stößel (20) an der ersten Membrane (2) betätigbares Entlüftungsventil (47, 48) zur Steuerung einer Strömungsverbindung zwischen einer mit der Hauptluftleitung während der zusätzlichen Entladung in Verbindung stehenden ersten Kammer (49) und einer mit der Atmosphäre verbundenen zweiten Kammer (50) im Gehäuse (1) aufweist.

8. Dreidruckventil nach Anspruch 7, dadurch gekennzeichnet, daß das Entlüftungsventil (47, 48) ein federbelastetes Ventilbauteil (47) und einen gehäusefesten Ventilsitz (48) aufweist, der die erste und zweite Kammer (49, 50) voneinander abtrennt.

9. Dreidruckventil nach Anspruch 7 oder 8, dadurch gekennzeichnet, daß die Strömungsverbindung zwischen der zweiten Kammer (50) und der Atmosphäre durch eine von der Entlüftungskammer (5) zur zweiten Kammer (50) im Stößel (17) verlaufende Durchlaßöffnung (56, 57) gebildet wird.
